# EUROPÄISCHE PATENTSCHRIFT

(11) **EP 1 521 023 B1**
(45) Veröffentlichungstag und Bekanntmachung des Hinweises auf die Patenterteilung: **09.05.2007**
(21) Anmeldenummer: 04016116.8
(22) Anmeldetag: 08.07.2004
(51) Int. Cl.: F16K 31/50, F16K 41/04, F16K 3/02

(54) **Spindellagerung in einem Fluidleitungsschieber**
Spindle bearing in fluid pipe slide
Palier pour une soupape d'arrêt

(30) Priorität: 02.10.2003 DE 20315221 U
(43) Veröffentlichungstag der Anmeldung: 06.04.2005
(73) Patentinhaber: Hawle Armaturen GmbH, 83395 Freilassing (DE)
(72) Erfinder: Katzenschwanz, Martin, 83416 Surheim (DE)
(74) Vertreter: Schwabe - Sandmair - Marx

(56) Entgegenhaltungen:
- DE-A- 3 440 464
- FR-A- 1 010 060
- US-A- 3 064 674
- US-A- 3 753 569
- US-A- 4 265 457
- US-A1- 2002 036 279

## Beschreibung

Die Erfindung betrifft eine Fluidleitungsschieber-Spindellagerung. Solche Schieber dienen der Begrenzung bzw. Unterbrechung des Fluidstroms (gasförmiges oder flüssiges Medium) in einer Leitung, beispielsweise einer Gas- oder Wasserversorgungsleitung. Die Schieber enthalten ein durch eine Spindel verschiebbares Absperrglied, mit dem der Durchgang des strömenden Mediums durch die Leitung geschlossen oder geöffnet werden kann.

Herkömmlicherweise umfassen solche Schieber ein Schieberoberteil, das eine Lagerbuchse aufnimmt, welche einen Lagerungsabschnitt einer Spindel drehbar lagern kann. Die gängigen Spindellagerungen sind so ausgeführt, dass in der Regel ein metallisches Halteteil aus korrosionsbeständigem Material, z.B. Bronze oder Messing in ein Innengewinde am Schieberoberteil eingeschraubt wird. Dieses Messingteil hält dann die Spindel und nimmt O-Ringe ab, zur Abdichtung gegen die Spindel und gegen das Oberteilgehäuse. Solche Anordnungen sind aus US 3,753,569 und US 3,064,674 bekannt.

Nachteiligerweise erfordern solche Spindellagerungen einen hohen Bedarf an Materialbearbeitung. Sowohl das Schieberoberteil als auch die Lagerbuchse (Messinghalteteil) müssen mit einem Gewinde versehen werden und an ihren Gleitflächen so bearbeitet werden, dass die Spindel leicht drehbar ist. Auch entstehen bei diesen Bearbeitungen blanke Metallflächen, die korrosionsanfällig sind.

Es ist die Aufgabe der vorliegenden Erfindung, eine Spindellagerung vorzuschlagen, welche die oben genannten Nachteile nicht mehr aufweist. Insbesondere soll der Bearbeitungsbedarf an den Spindellagerungsteilen entfallen oder äußerst gering gehalten werden. Unter anderem soll auch verbesserter Korrosionsschutz ermöglicht werden.

Diese Aufgabe wird erfindungsgemäß durch eine Spindellagerung gemäß dem Anspruch 1 gelöst. Die Unteransprüche definieren vorteilhafte Ausführungsformen der Erfindung.

Die Vorteile der vorliegenden Erfindung beruhen darauf, dass zumindest die Gleitflächen der Lagerbuchse ein gleitfähiges Kunststoffmaterial umfassen. Durch diese Materialwahl wird der Bearbeitungsaufwand eliminiert bzw. optimal minimiert. Ferner sorgt ein solches Material dafür, dass Korrosions-Angriffsflächen nicht mehr vorhanden sind. Insbesondere kann die Fluidleitungsschieber-Spindellagerung dadurch sehr viel kostengünstiger gestaltet werden.

Gemäß einer Ausführungsform der Erfindung besteht die Lagerbuchse vollständig aus dem gleitfähigen Kunststoffmaterial.

Gemäß einer weiteren Ausführungsform weisen die Lagerbuchse oder die Spindel Aufnahmen für Dichtelemente auf. Diese dienen z.B. zur Abdichtung an der Spindel bzw. am Schieberoberteil und sie sind insbesondere Ringnuten zur Aufnahme von O-Ring-Dichtungen.

Die erfindungsgemäße Fluidleitungsschieber-Spindellagerung kann so ausgeführt werden, dass die Lagerbuchse ein Buchsenunterteil und ein Buchsenoberteil aufweist, wobei die Dichtelemente insbesondere am Buchsenunterteil angeordnet sind. Dabei ist es möglich, das Buchsenoberteil in dem Buchsenunterteil zu lagern, und zwar insbesondere in einer becherartigen Ausnehmung. Die Lagerfläche zwischen Schieberoberteil und Lagerbuchse kann also nur durch das Buchsenunterteil gebildet werden.

Gemäß einer weiteren vorteilhaften Ausgestaltung der Erfindung wird die Lagerbuchse, mittels eines Hakenelements, insbesondere mittels eines Schnapphakens, im Schieberoberteil gegen eine axiale Verschiebung verrastet.

Gemäß einer anderen Ausgestaltung kann die Lagerbuchse mittels eines Rundrings aus Metall oder Kunststoff, insbesondere mittels eines geschlitzten Rundrings, im Schieberoberteil gegen eine axiale Verschiebung verrastet werden.

Die hierin beschriebenen Elemente der Erfindung können einzeln oder in jeder Kombination verwirklicht werden. Die Erfindung wird im weiteren anhand der einzigen beiliegenden Zeichnung näher beschrieben, die einen Längsschnitt durch eine erfindungsgemäße Spindellagerung zeigt.

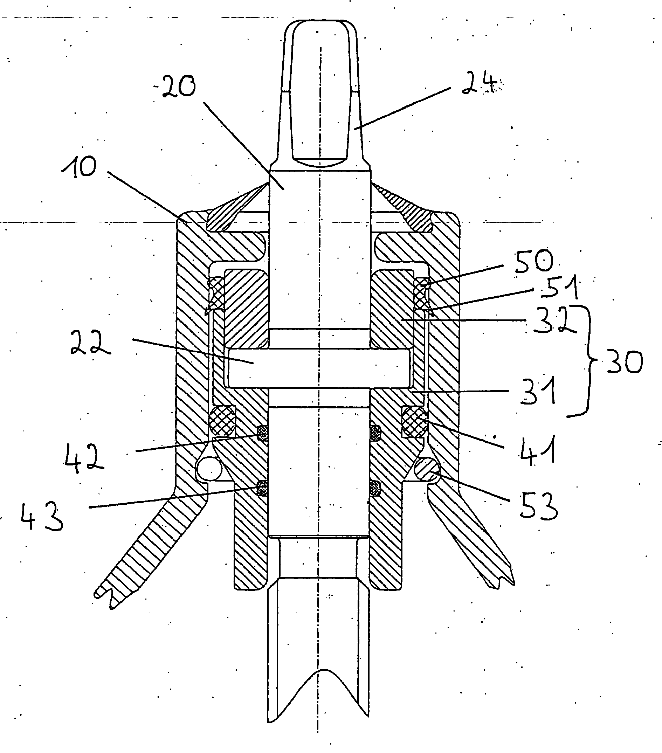

In der Zeichnung ist das Schieberoberteil mit dem Bezugszeichen 10 versehen; die Spindel trägt das Bezugszeichen 20 und die Lagerbuchse trägt insgesamt das Bezugszeichen 30. Die Spindel 20 ist im Innenraum des Schieberoberteils 10 drehbar gelagert, und zwar mittels der zweiteiligen Lagerbuchse 30, die ein Buchsenunterteil 31 sowie ein Buchsenoberteil 32 umfasst, welches in einer becherartigen Ausnehmung des Buchsenunterteils 31 aufgenommen wird. Die Spindel 20 weist an Ihrem oberen Ende einen Werkzeugeingriff 24 auf, und im Abstand davon einen Ringvorsprung 22. Der Ringvorsprung 22 liegt auf dem Buchsenunterteil 31 innerhalb der becherartigen Ausformung auf, und auf dem Vorsprung 22 kommt dann - in Anlage an die Spindel 20 - das Buchsenoberteil 32 zu liegen.

Zur Abdichtung gegen die Spindel 20 weist das Buchsenunterteil 31 innen zwei Nuten auf, in denen die O-Ringe 42 und 43 liegen. Zur Abdichtung gegen die Innenwand des Schieberoberteils weist das Buchsenunterteil 31 außen wiederum eine Nut auf, in der ein O-Ring 41 angeordnet ist. Damit ist gewährleistet, dass das Fluid im Innenraum des Schieberoberteils nicht durch die Spindellagerung austreten kann.

Die Lagerbuchse, also das Buchsenunterteil 31 und das Buchsenoberteil 32 sind aus einem gleitfähigen Kunststoffmaterial ausgebildet. Hier u.a. können die folgenden Materialien verwendet werden: POM, PTFE, Acetalharze.

Axial können die Buchse 30 und die Spindel 20 in verschiedener Weise im Schieberoberteil 10 gelagert werden. In der Zeichnung sind zwei Lagerungsarten dargestellt. Eine erste Lagerungsart wird mittels eines Hakenelements 50 realisiert, das einen Fortsatz 51 aufweist, welcher in eine Ausnehmung in der Innenwand des Schieberoberteils eingreifen kann. Das Hakenelement 50 sitzt fest auf dem Buchsenoberteil 32. Im unteren Teil des Buchsenunterteils 31 ist eine weitere axiale Verschiebesicherung dargestellt. Der Ring 53 umgibt das Buchsenunterteil 31 an einer schräg zusammenlaufenden Fläche und wird außen im Schieberoberteil in einer Ringnut abgestützt. Er verhindert damit eine Verschiebung der Buchsen-Spindeleinheit nach unten.

Die Konstruktion sowie die Materialwahl für die Lagerbuchse ermöglichen es erfindungsgemäß, dass die Buchsenteile nach der Herstellung nicht weiter bearbeitet werden müssen und trotzdem für eine feste und gut abdichtende Lagerung mit guten Gleiteigenschaften sorgen. Weder die Außenseite der Buchse 30 noch die Innenwand des Schieberoberteils müssen mit korrosionsanfälligen Gewinden versehen werden, da die Lagerung über Axialhalteelemente erfolgt, die form- und/oder kraftschlüssig wirken. Auch an der Gleitseite zur Spindel hin muss keine Bearbeitung der Buchsenelemente erfolgen, da das Material der Buchse selbst gute Gleiteigenschaften bietet.

## Patentansprüche

1. Fluidleitungsschieber-Spindellagerung mit einem Schieberoberteil (10), das eine Lagerbuchse (30) aufnimmt, welche einen Lagerungsabschnitt einer Spindel (20) drehbar lagert, **dadurch gekennzeichnet, dass** zumindest die Gleitflächen der Lagerbuchse (30) ein gleitfähiges Kunststoffmaterial umfassen.

2. Fluidleitungschieber-Spindellagerung nach Anspruch 1, **dadurch gekennzeichnet, dass** die Lagerbuchse (30) vollständig aus dem gleitfähigen Kunststoffmaterial besteht.

3. Fluidleitungschieber-Spindellagerung nach Anspruch 1 oder 2, **dadurch gekennzeichnet, dass** die Lagerbuchse (30) Aufnahmen für Dichtelemente aufweist, die zur Abdichtung an der Spindel (20) bzw. am Schieberoberteil (10) dienen, insbesondere Ringnuten zur Aufnahme von O-Ring-Dichtungen (41, 42, 43).

4. Fluidleitungschieber-Spindellagerung nach einem der Ansprüche 1 bis 3, **dadurch gekennzeichnet, dass** die Lagerbuchse (30) ein Buchsenunterteil (31) und ein Buchsenoberteil (32) aufweist, wobei die Dichtelemente insbesondere am Buchsenunterteil (31) angeordnet sind.

5. Fluidleitungschieber-Spindellagerung nach Anspruch 4, **dadurch gekennzeichnet, dass** das Buchsenoberteil (32) in dem Buchsenunterteil (31) gelagert ist, insbesondere in einer becherartigen Ausnehmung, wobei die Lagerfläche zwischen Schieberoberteil (20) und Lagerbuchse (30) nur durch das Buchsenunterteil (31) gebildet wird.

6. Fluidleitungschieber-Spindellagerung nach einem der Ansprüche 1 bis 5, **dadurch gekennzeichnet, dass** die Kunststoff-Lagerbuchse (30) mittels eines Hakenelements, insbesondere eines Schnapphakens (50), im Schieberoberteil (10) gegen eine axiale Verschiebung verrastet wird.

7. Fluidleitungschieber-Spindellagerung nach einem der Ansprüche 1 bis 5, **dadurch gekennzeichnet, dass** die Lagerbuchse (30) mittels eines Rundrings aus Metall oder Kunststoff, insbesondere mittels eines geschlitzten Rundrings, im Schieberoberteil (10) gegen eine axiale Verschiebung verrastet wird.

## Claims

1. A fluid conduit sluice valve spindle bearing, comprising an upper part of the sluice valve (10) which receives a bearing bushing (30) which rotationally supports a bearing portion of a spindle (20), **characterised in that** at least the sliding surfaces of the bearing bushing (30) comprise a low-friction plastic material.

2. The fluid conduit sluice valve spindle bearing according to claim 1, **characterised in that** the bearing bushing (30) consists entirely of the low-friction plastic material.

3. The fluid conduit sluice valve spindle bearing according to claim 1 or 2, **characterised in that** the bearing bushing (30) comprises recesses for sealing elements which serve to form a seal on the spindle (20) and/or on the upper part of the sluice valve (10), in particular annular grooves for receiving O ring seals (41, 42, 43).

4. The fluid conduit sluice valve spindle bearing according to any one of claims 1 to 3, **characterised in that** the bearing bushing (30) comprises a lower part of the bushing (31) and an upper part of the bushing (32), wherein the sealing elements are in particular arranged on the lower part of the bushing (31).

5. The fluid conduit sluice valve spindle bearing according to claim 4, **characterised in that** the upper part of the bushing (32) is supported in the lower part of the bushing (31), in particular in a cup-like cavity, wherein the bearing surface between the upper part of the sluice valve (10) and the bearing bushing (30) is only formed by the lower part of the bushing (31).

6. The fluid conduit sluice valve spindle bearing according to any one of claims 1 to 5, **characterised in that** the plastic bearing bushing (30) is latched against axially shifting in the upper part of the sluice valve (10) by means of a hook element, in particular a snap-fit (50).

7. The fluid conduit sluice valve spindle bearing according to any one of claims 1 to 5, **characterised in that** the bearing bushing (30) is latched against axially shifting in the upper part of the sluice valve (10) by means of a round ring made of metal or plastic, in particular by means of a slit round ring.

## Revendications

1. Palier de broche pour soupape d'arrêt comprenant une partie supérieure de soupape (10), qui accueille un coussinet (30), dans lequel une partie d'une broche (20) est montée de manière permettant la rotation, **caractérisé en ce qu'**au moins les surfaces de glissement du coussinet (30) comprennent une matière plastique apte au glissement.

2. Palier de broche pour soupape d'arrêt suivant la revendication 1, **caractérisé en ce que** le coussinet (30) est entièrement constitué de la matière plastique apte au glissement.

3. Palier de broche pour soupape d'arrêt suivant la revendication 1 ou 2, **caractérisé en ce que** le coussinet (30) présente des logements pour des éléments d'étanchéité, qui servent à l'étanchement avec la broche (20) et avec la partie supérieure de soupape (10), en particulier des rainures annulaires pour accueillir des joints toriques d'étanchéité (41, 42, 43).

4. Palier de broche pour soupape d'arrêt suivant l'une des revendications 1 à 3, **caractérisé en ce que** le coussinet (30) présente une partie inférieure de coussinet (31) et une partie supérieure de coussinet (32), les éléments d'étanchéité étant en particulier disposés à la partie inférieure de coussinet (31).

5. Palier de broche pour soupape d'arrêt suivant la revendication 4, **caractérisé en ce que** la partie supérieure de coussinet (32) repose dans la partie inférieure de coussinet (31), en particulier dans un renfoncement en forme de godet, la surface d'appui entre la partie supérieure de soupape (20) et le coussinet (30) étant uniquement formée par la partie inférieure de coussinet (31).

6. Palier de broche pour soupape d'arrêt suivant l'une des revendications 1 à 5, **caractérisé en ce que** le coussinet (30) en matière plastique est verrouillé contre le déplacement axial dans la partie supérieure de soupape (10) à l'aide d'un élément crochet, en particulier à l'aide d'un crochet à déclic (50).

7. Palier de broche pour soupape d'arrêt suivant l'une des revendications 1 à 5,-**caractérisé en ce que** le coussinet (30) est verrouillé contre le déplacement axial dans la partie supérieure de soupape (10) à l'aide d'un anneau en métal ou matière plastique, en particulier à l'aide d'un anneau fendu.
